# EUROPEAN PATENT APPLICATION

(11) **EP 3 767 600 A2**
(43) Date of publication of application: **20.01.2021**
(21) Application number: 20186533.4
(22) Date of filing: 17.07.2020
(51) Int. Cl.: G08B 13/191

(54) **DETECTOR FOR INFRARED RADIATION AND METHOD FOR IT**

(30) Priority: 19.07.2019 GB 201910377
(71) Applicant: G.J.D. Manufacturing Limited, Greater Manchester OL10 2SX (GB)
(72) Inventor: TIBBENHAM, Mark, Heywood, Greater Manchester OL10 2SX (GB); MOORE, Christopher, Heywood, Greater Manchester OL10 2SX (GB)
(74) Representative: Warren, Caroline Elisabeth

(57) **Abstract**

A detector is described, comprising a first cover having a cylindrical wall comprising a first aperture, and defining an interior space; a second cover having a cylindrical wall comprising a second aperture, wherein the second cover is arranged concentrically around the first cover; and a sensor mounted within the interior space, wherein the sensor has a field of view and is configured to detect infrared radiation. An overlap of the first aperture and the second aperture with the field of view of the sensor defines a detection area of the detector and the first cover and the second cover are each rotatable around the sensor to adjust the detection area. Optionally, the detection area is adjustable to an angle between 10° and 180°.

## Description

The present disclosure relates to a detector. In particular, the disclosure is related to an outdoor detector such as a passive infrared (PIR) detector. The disclosure is particularly applicable to an intrusion detector.

Conventional intrusion detectors typically include at least one sensor, such as a passive infrared (PIR) sensor e.g. a pyroelectric sensor, to detect infrared light. Pyroelectric sensors have a predefined field of view, which is typically around 90°. Such detectors may include a window in front of the sensor to allow infrared light therethrough to become incident on the sensor. Generally, the window does not impinge on the field of view of the sensor, such that the field of view is not unnecessarily reduced.

A PIR sensor detects changes in IR radiation incident upon it, and works by passively detecting radiation from external sources rather than actively emitting radiation and receiving reflected radiation. The intensity of IR radiation detected varies with the temperature and surface characteristics of an object in front of the sensor. When an object, for example a human, passes in front of the sensor, the temperature at the corresponding point in the field of view of the sensor will rise to body temperature and fall back down to the background temperature. The PIR sensor is configured to convert this temperature change into an associated voltage and output this to electronics which can interpret this signal as a detection event. This can trigger an output to a user interface, or can activate an alarm, a camera, or security lights, for instance.

According to a first aspect of the disclosure, there is provided a detector comprising: a first cover having a cylindrical wall comprising a first aperture, and defining an interior space; a second cover having a cylindrical wall comprising a second aperture, wherein the second cover is arranged concentrically around the first cover; and a sensor mounted within the interior space, wherein the sensor has a field of view and is configured to detect infrared radiation; wherein an overlap of the first aperture and the second aperture with the field of view of the sensor defines a detection area or a detection field of view of the detector; and wherein the first cover and the second cover are each rotatable around the sensor to adjust the detection area.

The detection area may also be referred to as the field of view of the detector, and takes into account the fact that parts of the cylindrical walls of the first and second covers may block part of the field of view of the sensor.

Optionally, the detection area is adjustable to an angle between 10° and 180°. That is, the first and second covers may be adjusted relative to each other so that the angle of the field of view of the detector is at least 10°, preferably at least 20°, further preferably at least 30°. In the same or another embodiment, the maximum angle of the field of view created by the positions of the first and second covers may be 180°, and is preferably at least 170°. As noted below, the angle defining the field of view may be continuously adjustable to within an accuracy of 10°, 5°, 2°, or 1°. Optionally, the detection area is continuous. Optionally, the first cover and/or the second cover comprise a single aperture each. In other words, optionally the first cover and/or the second do not comprise more than one aperture each.

Optionally, the first and/or second apertures have a width greater than the field of view of the sensor. In this manner, the apertures can be aligned so as to not interfere with the width of the field of view of the sensor. Of course, the covers can be adjusted so that the apertures partially overlap to achieve the desired detection area by impinging on the width of the field of view of the sensor. Optionally, the first and/or second apertures have a height greater than the field of view of the sensor. In this manner, the apertures do not interfere with the height of the field of view of the sensor.

By rotating the first and/or second covers to block part of the field of view of the sensor, the detection area is adjusted. In other words, the area over which the sensor can detect is reduced.

Optionally, the first cover and the second cover are rotatable in the opposite directions to adjust the size of the detection area. By rotating the first and second covers by the same amount, the detection area can be adjusted by the same amount at each side.

Optionally, the first cover and the second cover are rotatable in the same direction to adjust the orientation of the detection area. In this manner, a set detection area can be rotated to point in a different direction. By rotating the first and second covers together, but keeping them stationary relative to each other, the size of the detection area can be maintained, without requiring readjustment of the size of the detection area once each cover is adjusted into position to set the desired orientation.

The first and second cover may each be formed as a full cylinder which, apart from the aperture, completely surrounds the sensor. Alternatively, each cylindrical cover may be a partial cylinder or cylindrical segment that does not completely surround the sensor. As the skilled person will appreciate, a portion of the first and second cover may surround the sensor to form a full cylinder while a portion of the first and second cover may be formed of a cylindrical segment that does not completely surround the sensor, but forms an aperture that may be positioned in front of the sensors.

Optionally, the first cover and the second cover are each rotatable around an axis A. Preferably, the axis A is a central axis corresponding to the central axis of the concentric cylindrical walls of the first and second covers. In other words, the first and second covers are rotatable in position.

Optionally, in any of the embodiments described herein, the apertures defined in the first and second covers each expose an angle of at least 90°, preferably at least 120°, further preferably at least 150°, and optionally at least 180°.

Optionally, the detector further comprises an upper mount, wherein the first cover and/or the second cover is rotatably attached to the upper mount. In other words, the first cover and/or the second cover is attached to the upper mount while enabling rotation of the cover about the upper mount. Optionally, the first and/or second cover is attached to the upper mount at a point that aligns with the central axis A.

Optionally, the first cover is rotatably attached to the second cover. In other words, the first cover is attached to the second cover while enabling rotation of the first cover relative to the second cover, and vice versa. For example, where the first and second covers are attached to the upper mount, the first cover may also be attached to the second cover, such that the first and second covers are rotatable relative to each other and to the upper mount.

Optionally, the first cover comprises an end surface having a first hole and the second cover comprises an end surface having a second hole aligned with the first hole, and wherein the detector comprises a rod or other fixing means configured to be inserted into the first hole and the second hole for securing the first cover and the second cover, while enabling rotation of the first cover and the second cover about the rod or fixing means. Optionally, the first hole and/or the second hole is aligned with the central axis A. Optionally, the end surfaces are end faces at the upper end of the cylindrical walls of the covers (towards the upper mount). In other cases, only one of the first cover is secured to the rod, and the second cover is secured to the first cover rather than the rod, or vice versa.

Optionally, the rod is threaded and the first hole and the second hole have a complementary thread to receive the threaded rod. For example, the thread secures the cover in position while allowing rotation about the rod.

Optionally, the detector comprises a plurality of sensors. For example, the detector may have two sensors. Optionally, the combined field of view of the plurality of sensors is 180°.

Optionally, the detection area is adjustable between 0° and 180°. Optionally, the detection area is continuously adjustable to a precision of at least 10°, 5°, 2°, or 1°. That is, the detection area is continuously adjustable to within an accuracy of 10°, 5°, 2°, or 1°. This allows for greater precision than ratcheting or discrete curtain systems.

Optionally, the first aperture extends at least 180° around the cylindrical wall of the first cover, and/or the second aperture extends at least 180° around the cylindrical wall of the second cover. Thus, when the apertures align with the field of view of the sensor, the detection area is 180° (assuming the field of view of the sensor is at least 180°).

Optionally, the detector further comprises a support guide for receiving an end of the first cover and/or the second cover. The support guide may also be referred to as a lower mount. Preferably, the support guide receives the lower end of the first and/or second cover.

Optionally, the detector comprises a Fresnel lens for focussing infrared radiation to the sensor.

Optionally, the sensor is a passive infrared sensor. Preferably, the sensor is a pyroelectric sensor.

Optionally, the first cover is arranged in contact with the second cover such that the first cover is rotatable with the second cover. Optionally, the first cover is arranged in contact with the second cover such that the second cover is rotatable with the first cover. In other words, as the first cover is rotated the second cover is also rotated, and as the second cover is rotated the first cover is also rotated.

Optionally, the first cover being rotatable with the second cover is provided by friction between the first cover and the second cover.

Optionally, the friction can be overcome by retaining the first cover in place while the second cover is rotated or retaining the second cover in place while the first cover is rotated.

Optionally, the detector further comprises a retaining element or retaining means for retaining the first cover in place while the second cover is rotated or for retaining the second cover in place while the first cover is rotated.

Optionally, the detector further comprises a locking element for attaching the first cover to the second cover such that as the second cover is rotated, the first cover is also rotated in the same direction, and such that as the first cover is rotated, the second cover is also rotated in the same direction.

Optionally, the detector further comprises a motor configured to rotate the first cover and/or the second cover.

According to a second aspect of the disclosure, there is provided a method of adjusting the detector as disclosed herein, comprising: rotating the first cover and the second cover around the sensor to adjust the detection area.

Optionally, the method further comprises rotating the first cover and the second cover in the opposition directions to adjust the size of the detection area.

Optionally, the method further comprises rotating the first cover and the second cover in the same direction to adjust the orientation of the detection area.

According to a third aspect of the disclosure, there is provided a method of manufacturing a detector, comprising: providing a first cover having a cylindrical wall comprising a first aperture, and defining an interior space; providing a second cover having a cylindrical wall comprising a second aperture; arranging the second cover concentrically around the first cover; and mounting a sensor within the interior space, wherein the sensor has a field of view and is configured to detect infrared radiation; wherein an overlap of the first aperture and the second aperture with the field of view of the sensor defines a detection area of the detector; and wherein the first cover and the second cover are each rotatable around the sensor to adjust the detection area.

Preferred features of the first aspect may be applied to the second and third aspects alone or in combination.

Embodiments of the disclosure are described below, by way of example, with reference to the accompanying drawings.
**Figure 1** is a schematic perspective view of a detector according to a first embodiment of the disclosure.
**Figure 2** is a schematic view from the front of the detector of Figure 1.
**Figure 3** is a schematic view from the side of the detector of Figure 1.
**Figure 4** is a schematic view from the bottom of the detector of Figure 1.
**Figure 5** is a schematic view from the top of the detector of Figure 1.
**Figure 6** is a schematic view from the top of a detector according to a second embodiment of the disclosure, showing a first cover.
**Figure 7** is a schematic view from the top of the detector of Figure 6, with the first cover rotated.
**Figure 8** is a schematic view from the top of the detector of Figure 6, showing a first cover and a second cover.
**Figure 9** is a schematic view from the top of the detector of Figure 8, with the first cover and the second cover rotated in opposite directions.
**Figure 10** is a schematic view from the top of the detector of Figure 8, with the first cover and the second cover rotated in the same direction.

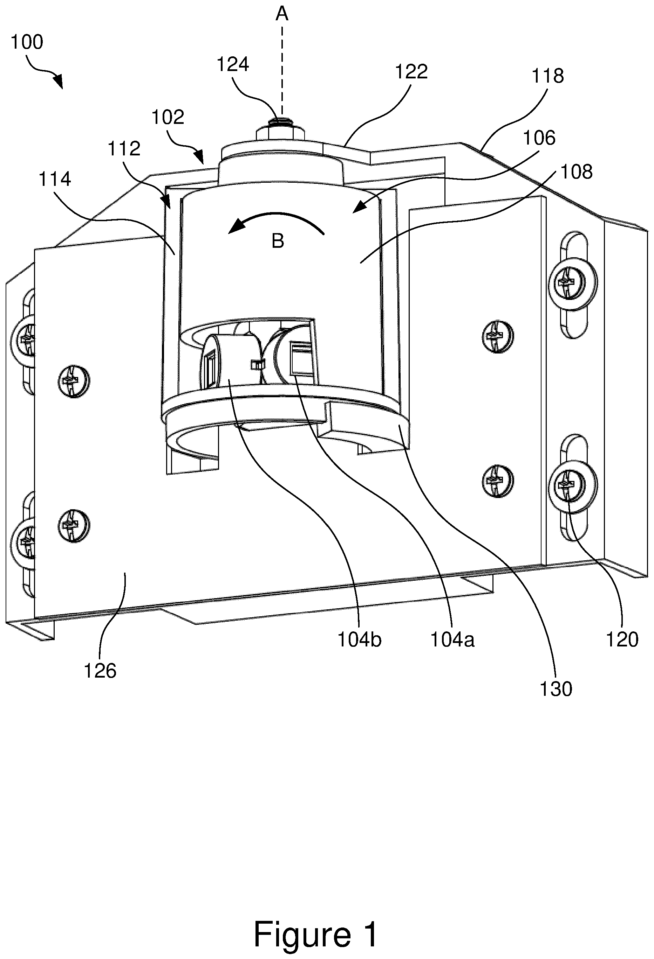

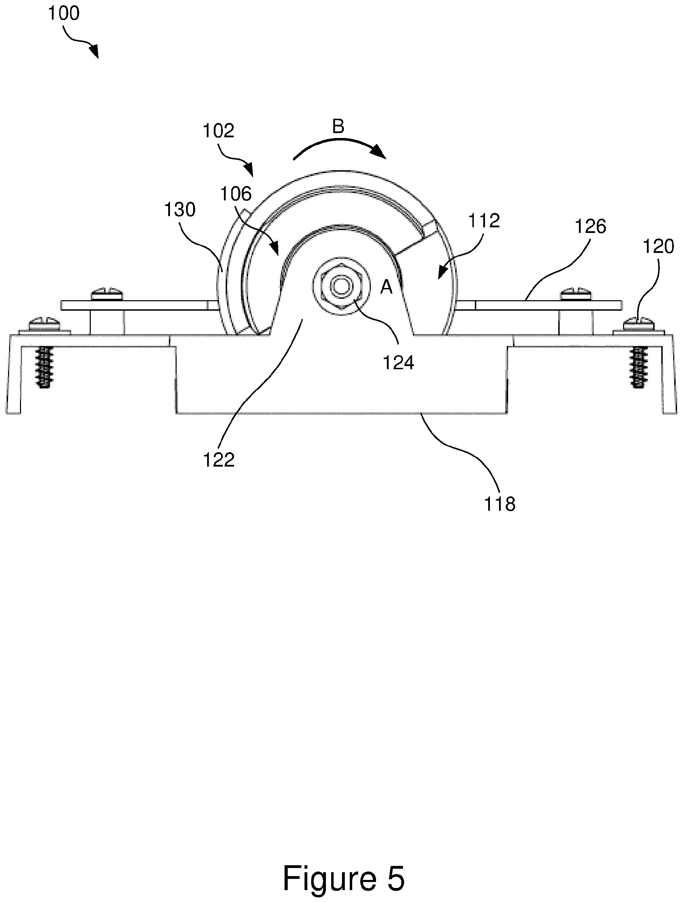

Referring to Figures 1 to 5, according to a first embodiment of the disclosure, a detector 100 is provided. The detector 100 comprises a sensor housing 102. The sensor housing 102 is sized to accommodate at least one sensor 104. In one example, the sensor 104 is configured to detect infrared (IR) radiation. In the first embodiment, the detector 100 comprises a first sensor 104a and a second sensor 104b. The sensor housing 102 also comprises a first cover 106 and a second cover 112. The first cover 106 comprises a side wall 108 and an aperture 110, while the second cover 112 comprises a side wall 114 and an aperture 116. The sensor housing 102 is configured to adjustably cover the sensors 104, as described in more detail below.

The detector 100 may also comprise an outer casing (not shown) for housing the components therein. The detector 100 may also comprise a window (not shown) in front of the sensors 104 and within the outer casing. The window acts to protect the interior of the detector 100 and the sensors 104 from foreign objects e.g. dust. The window may be made from an IR-transparent material such as a plastic, and may optionally filter the radiation passing therethrough to certain wavelengths. The window may also comprise a Fresnel lens for focussing the IR radiation to the sensors 104. The detector 100 may further comprise a camera (not shown), which may be triggered by a detection event sensed by the sensors 104.

The detector 100 comprises a rear plate 118, for example, for mounting on a wall. As such, the detector 100 is typically mounted to a vertical wall such that the rear plate 118 is oriented vertically, although other configurations are possible. As the sensors 104 are typically oriented to detect in a plane perpendicular to the rear plate 118, in this configuration the sensors 104 are arranged to sense substantially horizontally, for example to detect in a plane perpendicular to the wall. In an alternative configuration, the rear plate 118 may be tilted relative to the wall, for example to tilt the sensors 104 to a desired direction. For example, the detector 100 may be tilted downwards to focus detection in a direction below the detector 100. In other examples, the sensor housing 102 itself may be tilted to incline the sensors 104 relative to the rear plate 118.

The rear plate 118 comprises fixing means for attaching the rear plate 118 to the desired location e.g. against a wall. For instance, in Figures 1 to 5, the fixing means of the rear plate 118 is provided by screws 120. The screws 120 are arranged through slot holes in the rear plate 118. The slot holes for receiving the screws 120 are elongate in a direction parallel to a height of the rear plate 118, such that the rear plate 118 is moveable relative to the screws 120 in a direction parallel to the height of the rear plate 118. For example, the height of the rear plate 118 may be arranged substantially vertically when mounted on a wall, or may be tilted relative to the wall. The slot holes allow the vertical position of the detector 100 to be adjusted once mounted, as described below. A washer may also be provided between the head of the screw 120 and the rear plate 118.

The detector 100 also comprises an upper mount 122 connected to the rear plate 118. The upper mount 122 extends substantially perpendicularly from the rear plate 118. That is, when the rear plate 118 is mounted vertically, the upper mount 122 extends substantially horizontally. In the first embodiment, the rear plate 118 and the upper mount 122 are made from the same material and are formed integrally. For example, either or both of the rear plate 118 and the upper mount 122 may be made from moulded plastic.

The upper mount 122 comprises a hole which defines a central axis A. This hole is used for mounting and securing the sensor housing 102, as described below. The hole may have an internal thread so as to receive a threaded securing means 124. For example, the securing means 124 may be a rod, a screw, or a bolt. In the first embodiment, the securing means 124 has an external thread which is complementary to an internal thread of the hole of the upper mount 122. The securing means 124 may be advanced through the hole into a desired position, and may be fixed in position by a locking means, for example a nut tightened against the upper mount 122, as shown in Figure 1. A washer may also be provided between the nut and the upper mount 122.

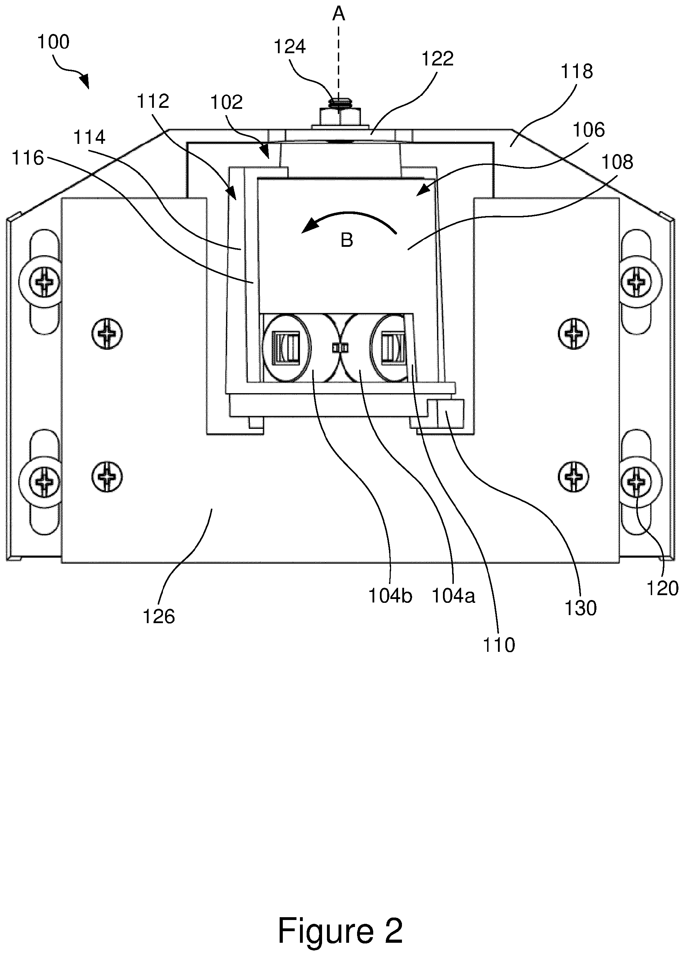

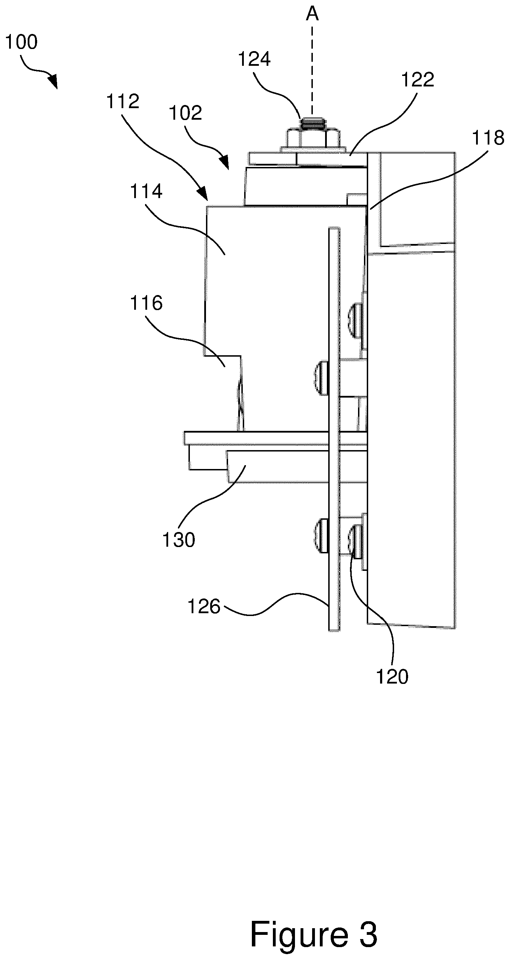

The detector 100 also comprises a front plate 126. The front plate 126 is arranged substantially parallel to the rear plate 118 and is arranged in front of the rear plate 118, such that when the rear plate 118 is mounted, for example on a wall, the front plate 126 is arranged further from the wall than the rear plate 118. The front plate 126 is spaced away from the rear plate 118, as shown best in Figures 3 to 5. The front plate 126 comprises a cut-out to receive the first cover 106 and the second cover 112, as shown in Figures 1 and 2. The cut-out extends from the uppermost part of the front plate 126 to part way into a height of the front plate 126. In other words, the cut-out extends from a side of the front plate 126 closest to the upper mount 122. The cut-out comprises two recesses, each coinciding with the location of the side walls of the first cover 106 and the second cover 112. As described below, the first cover 106 and the second cover 112 are cylindrical in shape, and the cut-out in the front plate 126 is arranged to receive the cylindrical side walls of the first cover 106 and the second cover 112. Between each recess, the front plate 126 comprises a protruding section. That is, the first cover 106 and the second cover 112 are arranged around the protruding section, sliding into the recesses from towards the upper mount 122. In this arrangement, part of the first cover 106 and the second cover 112 extend in front of the front plate 126 such that the front plate 126 does not interfere with the detection by the sensors 104.

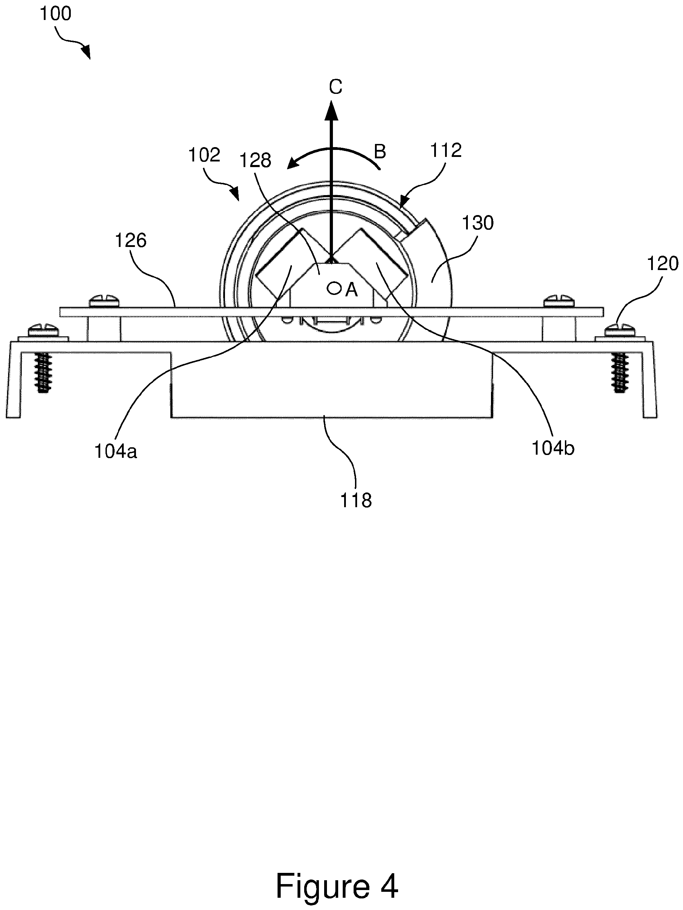

The protruding section of the front plate 126 is configured to support the sensors 104. In particular, the protruding section is attached to a sensor platform 128, as shown in Figure 4. The sensor platform 128 supports the sensors 104. In the first embodiment, the sensor housing 102 accommodates two sensors 104. In the first embodiment, a first sensor 104a and a second sensor 104b are provided. Each of the first sensor 104a and the second sensor 104b may be identical. Together, both (or more) sensors may be generically referred to herein as "the sensor".

In the first embodiment, the sensor 104 is a light-detecting sensor. More specifically, the sensor is configured to detect infrared radiation. For example, the sensor 104 is a passive infrared (PIR) sensor. In particular, PIR sensors detect or otherwise measure radiated IR light, rather than emitting and detecting reflected light. In the first embodiment, the sensor 104 is a pyroelectric sensor. In other embodiments, the sensor 104 may be a light-dependent resistor (LDR) or other suitable sensor for detecting light intensity, preferably of IR light.

In the first embodiment, the first sensor 104a and the second sensor 104b are each pyroelectric sensors. As shown best in Figures 1 and 2, each pyroelectric sensor 104 comprises a pyroelectric element secured behind a cover. The cover permits IR radiation therethrough but can also filter out unwanted radiation and can be adapted to select specific wavelengths. The pyroelectric element is contained within a casing, for example a metallic shell which can also secure the cover in place.
The sensors 104 have a sensor direction, which is the direction in which the sensors 104 point. In the first embodiment, the first sensor 104a and the second sensor 104b are arranged to point radially outwards from the sensor housing 102. That is, the sensors 104 are arranged centred around the central axis A and point radially outwards. Thus, the sensor direction is radially outwards from the central axis A. A plane of each of the sensors 104 is the plane in which the cover of the sensor 104 is oriented. In other words, the plane of the sensor 104 is perpendicular to the sensor direction. In the first embodiment, the plane of each sensor 104 is arranged substantially vertically, when the detector 100 is aligned vertically.

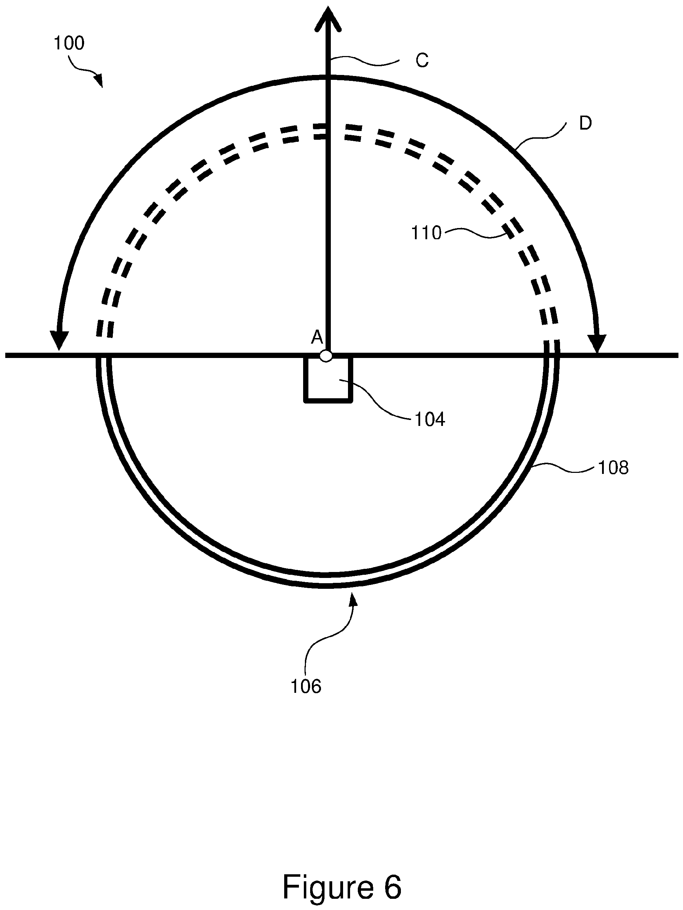

In some embodiments, more than two sensors 104 are provided. In other embodiments, only one sensor 104 is provided, such as in the second embodiment shown in Figures 6 to 10.

Each sensor 104 has a field of view. The field of view is the angle through which the sensor 104 can detect. Typically, the width of the field of view of a pyroelectric sensor 104 may be around 90°. When the sensor 104 is arranged horizontally, the sensor 104 has a field of view vertically of around 90°, and may have a field of view horizontally of around 90°. The field of view is centred on the sensor direction. Thus, in the above example, the field of view extends 45° either side of the sensor direction.

By combining two sensors 104 (such as first sensor 104a and second sensor 104b as best shown in Figure 2), with their respective fields of view adjacent each other, a combined field of view can be provided. In an example with each sensor 104 having an individual field of view horizontally of 90°, the combined field of view can be set to 180°, for example. In this case, the two sensors 104 would be separated by an angle of 90° (such that their respective sensor directions are spaced apart by 90°). In other examples, sensors 104 may have different fields of view and different numbers of sensors 104 may be arranged to build up an appropriate combined field of view. In one example, four sensors 104 may be arranged to provide a 360° combined field of view.

In some examples, a differential amplifier may be provided, and the outputs of the first sensor 104a and the second sensor 104b can be connected to opposite inputs of the differential amplifier. Hence, the sensor measurements can cancel each other out and the average temperature of the combined field of view is removed from the output voltage. This can prevent triggering of detection events from changes in the background temperature across the combined field of view of the sensor 104 which are observed by both of the first sensor 104a and the second sensor 104b.

In the first embodiment, the front plate 126 is a printed circuit board assembly (PCBA). The PCBA provides electronics for providing power to and operating the sensors 104 and for receiving sensor data from the sensors 104. The PCBA is spaced from the rear plate 118 by spacers or lugs, for example plastic lugs. The sensors 104 are connected to the PCBA by soldering the legs of the sensors 104 to the PCBA, optionally via a sensor platform 128. In other examples, the detector 100 may comprise a PCBA separate from and optionally attached to the front plate 126.

Referring to Figure 4, which shows the detector 100 from above, the sensor platform 128 comprises a triangular-shaped angled mould to mount the two sensors 104. For example, the mould may be made from plastic. The sensor platform 128 extends perpendicularly from the front plate 126 in a direction away from the rear plate 118. The sensors 104 are then mounted perpendicularly to the sensor platform 128 such that they are upright and vertical, as shown in Figures 1 and 2. The sensor platform 128 mounts the sensors 104 about the central axis A. The sensor platform 128 mounts the two sensors 104 at an angle relative to each other, such that they are spaced around the central axis A. As the sensors 104 are spaced about the central axis A, the sensors 104 are separated by an angle in the horizontal plane. In the first embodiment, the two sensors 104 are separated by an angle of 90°.

By pointing the first sensor 104a and the second sensor 104b in different directions around the central axis A, for example separated by approximately 90°, this allows the sensors 104 to be used together to map a wider combined field of view. As mentioned above, the sensor direction of each sensor 104 is the direction in which it is oriented.

Thus, the field of view of each sensor 104 extends typically 45° either side of the detection direction, although other values are possible. By providing sensors 104 adjacent to each other, the field of view of the sensors 104 can be combined. The angle of separation of the sensors 104 can be chosen to ensure that the field of view of each sensor 104 meets or overlaps with the field of view of the adjacent sensor 104. Thus, the fields of view of each of the first sensor 104a and the second sensor 104b join together form a combined, continuous field of view.

The detector 100 will have a detection range which is the distance to which the detector 100 can detect. This may be determined by the range of the sensors 104 used. In some configurations, the detection range may also be set by the vertical orientation angle of the detector 100. For example, if the detector 100 is mounted on a wall, and tilted downwards towards the ground, the detection range may be limited by the proximity to the ground in the line of sight of the detector 100. In other words, the more vertical oriented the detector 100, the larger the detection range (although this may be limited by the detection range of the sensor 104).

The detection range may also be adjusted by adjusting the vertical position of the rear plate 118. The rear plate 118 can be adjusted relative to the screws 120 within the slot holes of the rear plate 118 to vertically shift the rear plate 118. For example, considering an arrangement where the detector 100 is arranged pointing downwards towards the ground at around a 45° angle, then if the rear plate 118 is then raised, the detector 100 is shifted upwards and the detection range is increased. This is because the focal length of the sensors 104 is changed.

The sensor housing 102 comprises a first cover 106. The first cover 106 is generally cylindrical. The first cover 106 may otherwise be referred to as a first cylinder. The first cover 106 has a side wall 108 which is a cylindrical surface. Thus, the side wall 108 may otherwise be referred to as a cylindrical wall. The side wall 108 extends to define a circumference of the first cover 106. The first cover 106 is centred on the central axis A. In particular, the side wall 108 is centred on the central axis A. The first cover 106 defines an interior space. In particular, the side wall 108 is arranged to surround the sensors 104 such that the sensors 104 are enclosed in the interior space. The side wall 108 is substantially opaque to IR radiation. In this manner, the side wall 108 is configured to block IR radiation from becoming incident on the sensors 104 when the side wall 108 is positioned in front of the sensors 104 (i.e. in between the sensors 104 and the IR source which is external of the detector 100).

The side wall 108 defines a first end and a second end of the first cover 106 at each respective end of the cylindrical surface. The first end is arranged towards the upper mount 122 of the sensor housing 102, and the second end is arranged furthest from the upper mount 122. Preferably, in use, the detector 100 is arranged substantially upright, for example mounted on a vertical wall such that the central axis A is vertical, and the rear plate 118 is vertical, for example attached directly to the wall. In some examples, the detector 100 may be mounted vertically inclined on a wall, for example to point downwards such that the detector 100 is arranged at an angle from the wall. Such an arrangement may be typical of intrusion detectors or burglar alarms or detectors for CCTV cameras.

In the first embodiment, the first cover 106 comprises an upper surface at the first end. The upper surface forms an end face of the cylinder; that is, the first cover 106 is substantially closed at the first end. Thus, the upper surface is a circular end face of the cylinder. The first cover 106 is attached to the upper mount 122 such that the first cover 106 is rotatably attached to the upper mount 122. In particular, the upper surface is attached to the upper mount 122 of the sensor housing 102.

In the first embodiment, the upper surface comprises a hole which is aligned with the hole in the upper mount 122 described above. Thus, the hole in the upper surface is aligned with the central axis A. For example, the hole may be provided in the centre of the upper surface of the first cover 106. Therefore, the central axis A is aligned with the central longitudinal axis of the first cover 106. The securing means 124 is provided through the hole in the upper mount 122 and through the hole in the upper surface of the first cover 106. In the first embodiment, the securing means 124 is a threaded rod and the holes in the upper mount 122 and the first cover 106 are complementarily threaded to receive the rod. As shown in Figures 1 and 2, the rod of the securing means 124 is secured with a nut against the upper mount 122. In this manner, the first cover 106 is attached to the upper mount 122. In particular, the first cover 106 is rotatably fixed to the sensor housing 102 such that the first cover 106 is rotatable about the central axis A. This allows the side wall 108 to be rotated around the sensors 104. The securing means 124 thus centres and secures the first cover 106.

In alternative embodiments, the securing means 124 may not be a threaded rod and the holes in the upper mount and/or the first cover 106 need not be threaded. Instead, the holes may be sized to secure the first cover 106 relative to the upper mount 122 by friction. Thus, the first cover 106 can be rotated by overcoming the friction, while the friction maintains the first cover 106 in position while not being rotated.

In other embodiments, the first end of the first cover 106 is not closed. For example, the first cover 106 may instead be rotatably fixed to the upper mount 122 by other means, such as struts connecting the side wall 108 of the first cover 106 to the upper mount 122 without closing the first end.

In the first embodiment, the second end of the side wall 108 is open. That is, the end face at the second end of the cylindrical side wall 108 is not closed. In some embodiments, the side wall 108 at the second end of the first cover 106 (opposite the first end which is attached to the upper mount 122) is rotatably attached to a lower mount 130. The lower mount 130 may be attached to the front plate 126, for example to the protruding section of the front plate 126. In the first embodiment, the lower mount 130 is a guide having a groove for receiving the second end of the side wall 108. In particular, the groove in the lower mount 130 is a circular groove having a complementary shape to receive the second end of the cylindrical side wall 108. Thus, the first cover 106 can be rotated within the groove of the lower mount 130. The groove in the lower mount 130 need not extend around the entire circumference of the side wall 108, and in the first embodiment only extends part way around the circumference of the side wall 108. In this way, the first cover 106 is secured between the upper mount 122 and the lower mount 130 and is rotatable therebetween. The lower mount 130 can provide additional support to maintain the first cover 106 in the desired location. However, in some embodiments the lower mount 130 may not be provided.

In other embodiments, the first cover 106 comprises a base at the second end, which forms an opposing face of the cylinder to the upper surface at the first end. In such embodiments, the first cover 106 may be attached to the lower mount 130 in a similar manner to the attachment to the upper mount 122, for example. For instance, a further threaded rod may be used to rotatably attach the first cover 106 to the lower mount 130. Alternatively, the same rod may be provided through the sensor housing 102 and attach the first cover 106 at the upper mount 122 and also at the lower mount 130.

In the first embodiment, the side wall 108 is slightly tapered such that opposing sides of the side wall 108 are not parallel to each other. The side wall 108 is tapered towards the first end. Thus, the diameter at the first end of the cylinder is smaller than the diameter at the second end. This can provide a simpler shape to obtain using a plastic mould, in particular making it easier to remove the component from the mould, which can reduce manufacturing costs. In other examples, the sides of the side wall 108 are parallel, and the side wall 108 has a constant diameter along its height.

The first cover 106 comprises an aperture 110 in the side wall 108. The aperture 110 is a section cut away from the side wall 108. The aperture 110 extends part way around the circumference of the side wall 108. The aperture 110 thus defines an opening in part of the side wall 108. In particular, the aperture 110 extends approximately half way around the circumference of the side wall 108. For example, the aperture 110 extends more than approximately 50%, preferably more than 40%, more preferably more than 30% of the circumference of the side wall 108.

The aperture 110 is sized to permit IR light to pass through the aperture 110 to the sensors 104. Therefore, it is preferable that the aperture 110 does not restrict the field of view of the sensors 104 unnecessarily. Using the example combined field of view of the sensors 104 of 180°, preferably the aperture 110 exposes an angle of 180° or more, corresponding to 50% or more of the circumference of the cylindrical side wall 108 of the first cover 106.

The aperture 110 extends part way along the height of the side wall 108. The height of the side wall 108 is defined as the distance between the first end and the second end (i.e. the height of the cylinder). That is, the aperture 110 does not extend along the entire height of the side wall 108. For example, the aperture 110 extends less than 50%, preferably less than 40%, more preferably less than 30% of the height of the side wall 108. The aperture 110 is arranged towards the second end of the first cover 106. In the first embodiment, the aperture 110 extends from the second end of the first cover 106 to part way along the height of the side wall 108. In other words, in the first embodiment, the first cover 106 comprises a section cut away from the second end, which extends around part of the circumference of the side wall 108. Thus, at the second end, the side wall 108 extends around only part of the circumference. This may provide a simple cut-out from one end of the cylinder, and may be reduce manufacturing complexities. In other embodiments, the aperture 110 may be spaced away from the second end. In some examples, the vertical edge between the aperture 110 and the side wall 108 may be used to impose a limit on the vertical field of view of the sensors 104.

The aperture 110 is arranged at a point along the height of the side wall 108 towards the location of the sensors 104 within the interior space defined by the first cover 106. In the first embodiment, the aperture 110 extends to a positon along the height of the side wall 108 that overlaps with the sensors 104. Preferably, the aperture 110 extends to a position such that when the aperture 110 is completely aligned with the sensors 104, the side wall 108 does not interfere with the combined field of view of the sensors 104. In the first embodiment, the aperture 110 has a width equal to or greater than the width of the combined field of view of the sensors 104. Thus, when the aperture 110 is aligned with the sensors 104, the side wall 108 does not interfere with (or, in other words, reduce) the combined field of view of the sensors 104.

It should be noted that the aperture 110 is preferably transparent to IR radiation. In other words, the aperture 110 does not block IR radiation. For example, where the aperture 110 is a cut-out from the first cover 106, this clearly does not block IR light. In other embodiments, the aperture 110 may comprise a wall or a film such that there is no gap in the side wall 108, and a complete cylinder is formed. In such examples, the aperture 110 is not opaque to IR radiation. For example, the aperture 110 may comprise a wall of IR-transparent material, for example an IR-transparent lens or window, or in some cases may be IR-translucent. The aperture 110 may in some cases provided filtering or focussing characteristics if a window is used.

The first cover 106 is thus a cylinder which has an aperture 110 in part of the cylindrical side wall 108. The first cover 106 is rotatable about the central axis A. Therefore, as the first cover 106 is rotated, the aperture 110 is also rotated such that the orientation of the aperture 110 is changed. As the sensors 104 are fixed in place, part of the combined field of view of the sensors 104 can be covered at one edge by rotating the first cover 106 such that the side wall 108 interferes with and blocks part of the field of view at the desired edge.

When the side wall 108 interferes with and covers part of the field of view, the maximum area in which the sensors 104 can detect from is reduced. This effective field of view is referred to as the detection area of the detector 100. Thus, when the aperture 110 fully exposes the sensors 104, the detection area is defined by the full combined field of view of the sensors 104. However, if the side wall 108 blocks part of the detection area at the edge of the field of view of the first sensor 104a, then the detection area is modified to be between that part of the side wall 108 and the furthest edge of the field of view of the second sensor 104b.

The detection area defined a detection direction which is analogous to the sensor direction for each individual sensor. Thus, the detection direction is defined as the midpoint between the opposing edges of the detection area. For example, where the entire combined field of view of the sensors 104 is exposed by the aperture 110, the detection direction is midway between the two sensors 104. The detection direction is illustrated in Figure 4 by Arrow C.

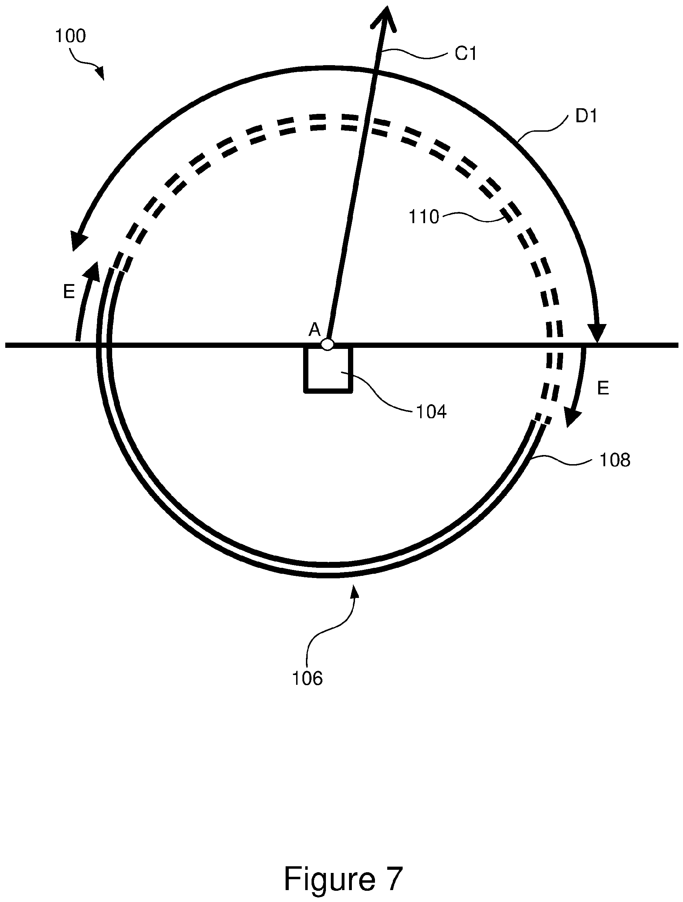

When the detection area is modified by rotating the side wall 108 to block part of the combined field of view of the sensors 104, the effective detection direction is also changed. The detection direction is changed by the same amount as the change in the size of the detection area from the blocking by the side wall 108. This is described in more detail with respect to Figures 6 and 7.

When the first cover 106 is rotated to cover part of a sensor 104, the detection area is reduced and the detection direction is shifted. This can be used to mask off areas of the field of view from detection, for example to focus on a particular area without rotating the entire detector 100. For example, objects in part of the field of view may be causing false detection events, or the field of view may be desired to be diverted away from a nearby light source. In other examples, the field of view may be desired to be adjusted to match with the field of view of a corresponding camera. For example, in some cases, a camera may be provided alongside the detector 100 and the detector 100 may be used to trigger the camera to begin recording. It is important that the detector 100 field of view and the camera field of view are matched and aligned such that when the camera begins recording, the captured field of view corresponds to that of the detector 100. Otherwise, events that triggered the detector 100, such as a person entering the field of view, may not be caught by the camera if the detector 100 has a wider field of view than the camera. Equally, if the field of view of a camera changes (e.g. it rotates), then the detector 100 can adjust its detection area correspondingly. Hence, it is important to be able to adjust the field of view of the detector 100 as desired.

The first cover 106 can be rotated either manually or electrically. For example, the first cover 106 can be rotated by hand, or rotated using an electric motor. By providing a cylinder rotatable about the central axis A, this allows for precise alignment of the detection area. Preferably, rotation of the first cover 106 may be smooth and continuous. This is provided by the structure of the rotatable cylinder, and has the advantage of being rotatable more precisely than mechanisms using discrete ratchets. However, in other examples, rotation of the first cover 106 may be guided by use of a ratcheting mechanism or other discrete positioning system such that the position and change in position can be well defined. For example, a ratcheting mechanism may allow the first cover 106 to be rotated in discrete units, for example in 10° or 5° units.

The sensor housing 102 also comprises a second cover 112. The second cover 112 is arranged around the first cover 106. That is, the second cover 112 is larger than the first cover 106, and in particular has a larger diameter than the first cover 106. The second cover 112 is generally cylindrical. The second cover 112 may otherwise be referred to as a second cylinder. As the first cover 106 is arranged inside the second cover 112, the first cover 106 may be referred to as an inner cylinder, while the second cover 112 may be referred to as an outer cylinder. The second cover 112 is located centred on the central axis A. The second cover 112 is arranged around the first cover 106. In particular, the second cover 112 and the first cover 106 form concentric cylinders.

The second cover 112 may be similar to the first cover 106, except where explained below, and it will be appreciated that any features described above with reference to the first cover 106 can be equally applied to the second cover 112.

The second cover 112 is arranged around the first cover 106 and is preferably arranged to contact the first cover 106. The second cover 112 is arranged to contact the first cover 106 such that as the second cover 112 is rotated, the first cover 106 is also rotated due to the friction between the first cover 106 and the second cover 112. In other examples, the second cover 112 is arranged around the first cover 106 without contacting the first cover 106.

The second cover 112 has a side wall 114 which is a cylindrical surface. The side wall 114 is similar to the side wall 108 of the first cover 106, and may include any of the features described above in relation to the side wall 108 of the first cover 106. The side wall 114 thus extends to define a circumference of the second cover 112. The circumference of the side wall 114 of the second cover 112 is larger than the circumference of the side wall 108 of the first cover 106. Similarly to the first cover 106, the side wall 114 of the second cover 112 is substantially opaque to IR radiation.

The side wall 114 of the second cover 112 defines a first end and a second end of the second cover 112, similarly to the side wall 108 of the first cover 106. As best shown in Figure 2, the second cover 112 comprises an upper surface at the first end. In the first embodiment, the upper surface is configured to contact the upper surface of the first cover 106 such that an inner surface of the upper surface of the second cover 112 contacts an outer surface of the upper surface of the first cover 106. This acts as a lip such that the second cover 112 is secured and rotatable around the first cover 106. In other examples, the second cover 112 is not attached to the first cover 106. The upper surface attaches the second cover 112 to the upper mount 122. The second cover 112 is thus rotatably fixed to the upper mount 122 such that the second cover 112 is rotatable about the central axis A.

The second cover 112 comprises an aperture 116 in the side wall 114. The aperture 116 is similar to the aperture 110 of the first cover 106, except where explained below, and it will be appreciated that any features described above with reference to the aperture 110 of the first cover 106 can be equally applied to the aperture 116 of the second cover 112. Similarly to the aperture 110 of the first cover 106, the aperture 116 of the second cover 112 is a section cut away from the side wall 114 and extends part way around the circumference of the side wall 114. The aperture 116 also extends approximately half way around the circumference of the side wall 114. For example, the aperture 116 may be sized to not restrict the detection area of the sensors 104. Thus, the aperture 116 may be at least 180°, or at least 50% of the circumference of the side wall 114. For example, the aperture 116 of the second cover 112 may extend the same amount as the aperture 110 of the first cover 106.

The aperture 116 also extends part way along the height of the side wall 114. In contrast to the aperture 110 of the first cover 106, the aperture 116 of the second cover 112 extends most of the way along the height of the side wall 114, except at the second end towards the lower mount 120. As mentioned above, in some examples the height of the detection area has already been set by the aperture 110 of the first cover 106, allowing the height of the aperture 116 of the second cover 112 to be taller, meaning that the second cover 112 can be more lightweight. This also can provide a simpler component to manufacture using a mould.

In the first embodiment, the aperture 116 does not extend along the entire height of the side wall 114. For example, the aperture 116 extends less than 100%, preferably less than 90%, more preferably less than 80% of the height of the side wall 114. In the first embodiment, the aperture 116 extends from the first end of the second cover 112 part way along the height of the side wall 114. In other words, in the first embodiment, the second cover 112 comprises a section cut away from the first end, which extends around part of the circumference of the side wall 114. Thus, at the first end, the side wall 114 extends around only part of the circumference. In other embodiments, the aperture 116 may be spaced away from the first end.

The side wall 114 extends around the entire circumference at the second end to improve structural integrity, prevent flexing of the cylindrical side wall 114, and also allowing the lower mount 130 to provide a guide for support of the second cover 112, for example as it is rotated.

Similarly to the aperture 110 of the first cover, the aperture 116 of the second cover 112 is arranged along the height of the side wall 114 towards the location of the sensors 104 within the sensor housing 102, such that the side wall 114 does not interfere with the field of view of the sensors 104, when correctly aligned.

The second cover 112 is rotatable about the central axis A. Therefore, as the second cover 112 is rotated, the aperture 116 is also rotated such that the orientation of the aperture 116 is changed. In the same way as with respect to the first cover 106, the detection area can be reduced at one edge by rotating the second cover 112 such that the side wall 114 interferes with and blocks part of the detection area at the desired edge. When the second cover 112 is rotated to cover part of a sensor 104, the detection area is reduced and the detection direction is shifted.

Overall, the detection area is defined by an overlap of the combined field of view of the sensors 104 with the aperture 110 of the first cover 106 and the aperture 116 of the second cover 112. In other words, the detection area is reduced when parts of the first cover 106 and the second cover 112 overlap with the combined field of view of the sensors 104. The first cover 106 and the second cover 112 are thus rotatable to control the detection area, and the associated detection direction.

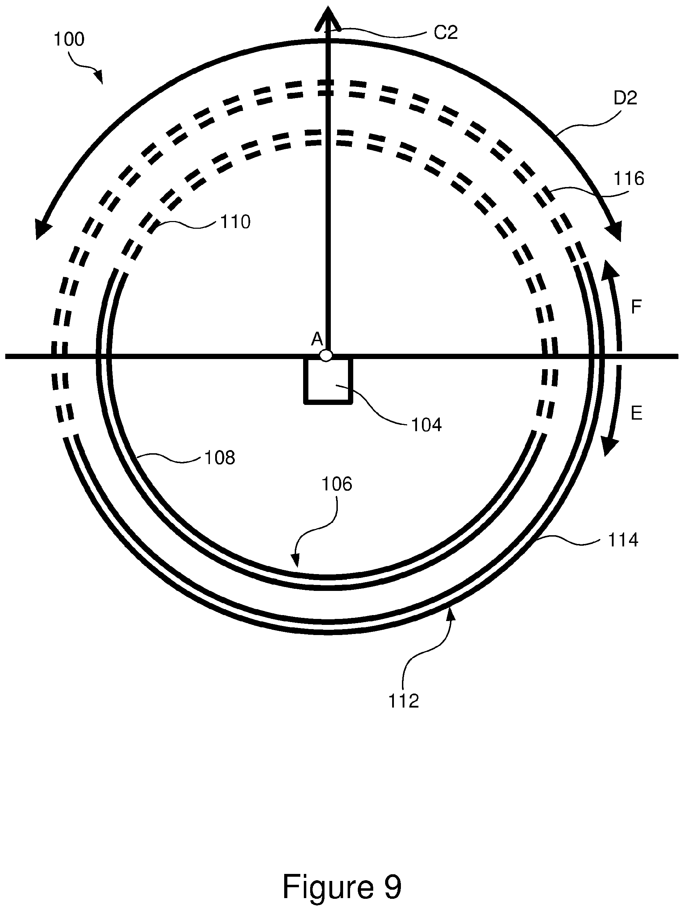

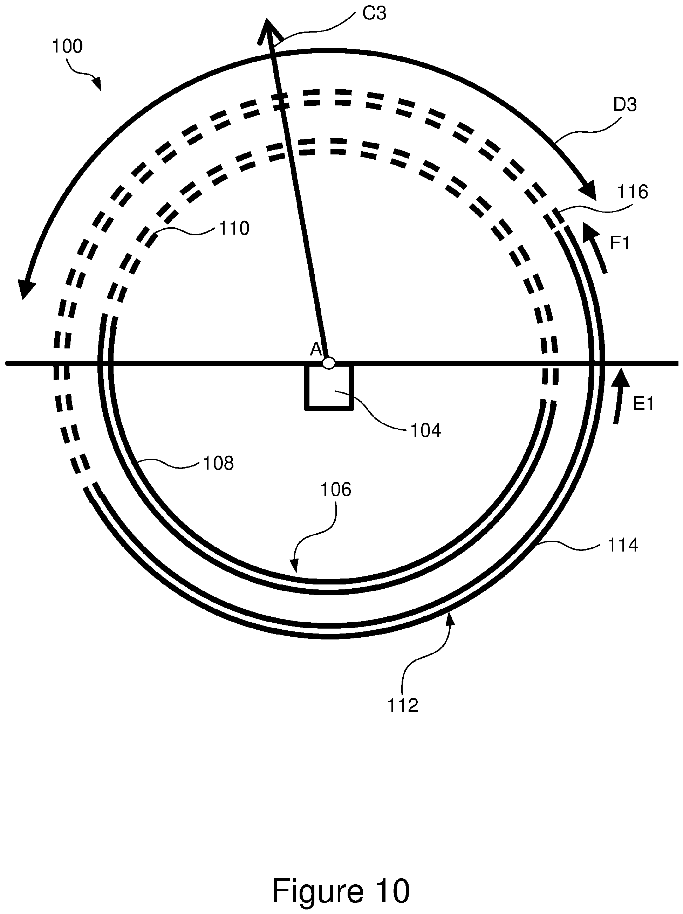

The second cover 112 and the first cover 106 are independently rotatable. The second cover 112 can be rotated in combination with the first cover 106 to change the detection area or the detection direction, independently. For example, the first cover 106 and the second cover 112 can be rotated in the same direction to adjust the detection direction, while they can be rotated in opposite directions to adjust the detection area. This operation is described in more detail with reference to Figures 9 and 10.

The second cover 112 can be rotated either manually or electrically. For example, the second cover 112 can be rotated by hand, or rotated using an electric motor. For example, the same motor may be used to drive the first cover 106 and the second cover 112.

The first cover 106 and the second cover 112 may be rotated together such that they are not rotated relative to each other. For example, the first cover 106 may be in contact with the second cover 112 such that friction from the contact causes the first cover 106 to move with movement of the second cover 112. For instance, the first cover 106 may be attached to the second cover 112. As a result, movement of the first cover 106 causes rotation of the second cover 112 in the same direction by the same amount. This provides for easy change of the detection direction, without changing the detection area, as described in more detail below with reference to Figures 7 to 10.

The first cover 106 and the second cover 112 may be rotatable independently from each other such that the second cover 112 can be rotated without rotating the first cover 106, and vice versa. For example, this may be achieved by providing the second cover 112 spaced away from the first cover 106 to allow independent rotation. Alternatively, the second cover 112 may be in contact with the first cover 106 such that they are rotatable together (e.g. due to friction). In some such examples, the first cover 106 and/or the second cover 112 may be held in place while the other is rotated. As an example, a user may hold the cover in position, e.g. using their hand. Otherwise, a retaining element may be provided which is operable to separately retain each of the covers. For example, the retaining element may be applied to the first cover 106 to inhibit movement while the second cover 112 is rotated, or applied to the second cover 112 to inhibit movement while the first cover 106 is rotated. For instance, the retaining element may be a detent or a latch which is applied to the cover to friction fit or otherwise prevent rotation.

In another example, the sensor housing 102 may comprise a locking element for attaching the first cover 106 and the second cover 112. For example, the locking element may be a latch. For example, the locking element may be used in examples where the first cover 106 is not in contact with the second cover 112. By providing a locking element, this enables rotation of the first cover 106 with the second cover 112, for example.

The detector 100 may comprise a lens such as a Fresnel lens in front of the sensors 104. Fresnel lenses typically have a plurality of zones or segments. Each vertical zone is arranged with a horizontal angle of approximately 5-10°. The detector 100 can be configured such that the detection area can be set to individual zones of the Fresnel lens. For example, the detection area can be set to a single zone of the Fresnel lens such as 10°, or 5°, or even 1°. Such a precision is a result of the continuous rotatablity of the first cover 106 and the second cover 106 being concentric cylinders around the central axis A.

This arrangement provides a detection area adjustment mechanism to provide a total field of view of the detector 100 of, for example, between 10° and 180° simply by rotation of the cylinders. Both sensors 104 together are arranged to observe across the 180° angle, and the aperture 110 of the first cover 106 and the aperture 116 of the second cover 112 can be designed accordingly. One sensor 104a can be blocked completely, allowing only a maximum of 90° for the other sensor 104b. That sensor 104b could then have its field of view reduced from 90° to e.g. 10°. Once a restricted field of view has been set, both cylinders can be moved as one. The set field of view could then be moved from left to right as desired.

The detector 100 may further comprise electronics configured to output a signal indicative of a detection event based on measurements from the sensor 104. The signal may be output when the sensor measurements are determined to exceed a pre-set threshold value. For example, the signal may be used to sound an alarm, such as when the detector 100 is configured as an intruder detector. In another example, the signal may be used to trigger a camera to being recording. The electronics for powering, controlling, and receiving sensor information may be provided on the PCBA of the front plate 126, for example. The detector 100 may be configured to output the signal of a detection event to a processor such as at a server which may be local or remote.

Referring to Figures 6 to 10, according to a second embodiment of the disclosure, a detector 100 is provided. The detector 100 may be identical to the detector 100 of the first embodiment. The detector 100 of the second embodiment is illustrated schematically for ease of interpretation, and it will be appreciated that the detector 100 may include one or more of the features described above in relation to Figures 1 to 5 of the first embodiment.

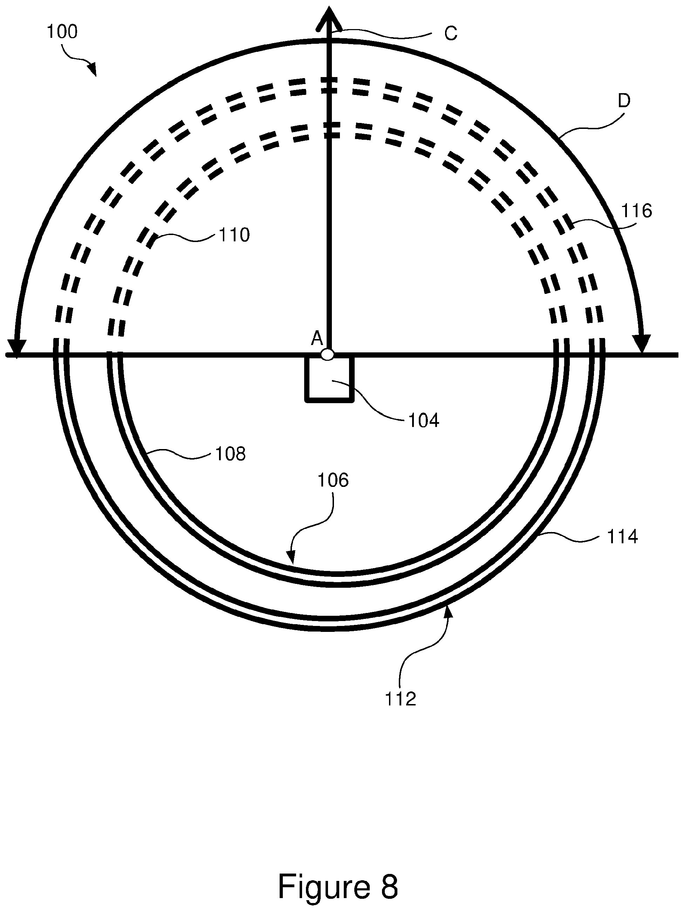

The operation with respect to the first cover 106 will now be described. Turning to Figure 6, the detector 100 has been simplified to show the sensor 104 and the first cover 106. Although Figures 6 to 10 show only one sensor 104 for simplicity, it will be appreciated that this can be replaced with two or more sensors, such as the first sensor 104a and the second sensor 104b of the first embodiment, having a combined field of view. Moreover, Figure 6 shows the first cover 106 without the second cover 112 to illustrate more clearly the operation of the first cover 106, and it will be appreciated from the discussion in relation to Figures 8 to 10 that the detector 100 of the second embodiment will further comprise a second cover 112.

In Figure 6, the first cover 106 has a side wall 108. In this embodiment, the side wall 108 has an aperture 110 extending half way around the side wall 108. The aperture 110 is denoted in Figure 6 as a dotted line to indicate that it is transparent to IR radiation, or may in fact simply be a gap or cut-out in the side wall 108. The aperture 110 is positioned along the height of the side wall 108 (into the page in Figure 6) to overlap with the sensor 104. Figures 6 and 7 each show a cross section of the first cover 106 at a point along the height of the side wall 108 overlapping with the sensor 104 and hence the aperture 110. In this position, in the cross section shown, the side wall 108 extends around half of the cylinder of the first cover 106, while the other half is absent due to the aperture 110. It will be appreciated that other sizes of the aperture 110 are possible. In Figure 6, the side wall 108 is positioned such that the aperture 110 exposes the sensor 104. That is, the side wall 108 is arranged behind the sensor 104.

In Figure 6, the first cover 106 is in an open position. In the open position, the first cover 106 is arranged such that the sensor 104 is not covered by the side wall 108 - that is, the aperture 110 aligns with a field of view of the sensor 104. In the second embodiment, the sensor 104 has a field of view of 180°, although in some embodiments this may be provided by two adjacent sensors 104 having an individual field of view of 90°. In the open position, the sensor 104 is exposed. The open position is defined when the side wall 108 does not interfere with the field of view of the sensor 104. Thus, the aperture 110 is sized to allow the side wall 108 to be positioned so as to not interfere with or block the field of view of the sensor 104 at the illustrated orientation of the side wall 108. Therefore, the aperture 110 is at least as wide as the field of view of the sensor 104. In Figure 6, the aperture 110 is the same size as field of view of the sensor 104.

As described above, the overlap of the aperture 110 of the first cover 106 with the field of view of the sensor defines a detection area D, as illustrated in Figure 6. As the aperture 110 fully exposes the field of view of the sensor 104, in Figure 6 the detection area D has an angle of 180°. The detection area D is thus defined as the overlap of the aperture 110 with the field of view of the sensor 104, or where more than one sensor 104 is provided, with the combined field of view of the sensors 104. In the open position, the detection area D is at a maximum size and is limited by the field of view of the sensor 104, and not by the side wall 108 impinging on the field of view.

The detection area D defines a detection direction C, mid-way between the two edges of the detection area D. In Figure 6, the edges of the detection area D are defined by the limits of the field of view of the sensor 104. The detection direction C is thus the net direction of the orientation of the detection area D. In other words, it is the average direction of the field of view of the sensor 104. The detection direction C is perpendicular to the plane of the sensor 104. Where two sensors 104 are provided separated by 90°, the detection direction C is defined as mid-way between the two sensors 104.

Turning to Figure 7, as described above the first cover 106 can be rotated to change the detection area D and the detection direction C. The detector 100 of Figure 7 is identical to the detector 100 as shown in Figure 6, except that the side wall 108 has been rotated by a first cover adjustment angle E. The first cover 106 has been rotated around the sensor 104 about the central axis A, in a clockwise direction. In particular, in Figure 7 the side wall 108 has been rotated around the central axis A by an angle of 20°.

As the first cover 106 is rotated, the aperture 110 changes position along the circumference of the side wall 108 relative to the sensor 104 and the respective field of view, which remains stationary. Thus, the first cover 106 is rotated around the sensor 104.

Figure 7 shows a detection area D1 that is different to the detection area D of Figure 6, and a detection direction C1 that is different to the detection direction C of Figure 6. As the first cover 106 is rotated, the side wall 108 impinges on the field of view of the sensor 104 corresponding to the detection area D of Figure 6. The first cover 106 has been rotated by an angle E, such that a part of the side wall 108 corresponding to the angle E covers the field of view of the sensor 104. In other words, in Figure 7, the effective field of view of the sensor 104 is reduced to a detection area D1 at this edge by an amount corresponding to angle E. As the sensor 104 has remained in position during this rotation, the opposing edge of the detection area D1 is unchanged, and thus the total detection area D1 is reduced by an angle E, as illustrated in Figure 7, relative to the detection area D of Figure 6. This reduces the effective field of view of the sensor 104.

Therefore, the detection area D1 is bound on one side by the side wall 108 which extends by an angle E into the detection area D, and is bound on the other side by the edge of the field of view of the sensor 104, which is unchanged in position between Figures 6 and 7. As the detection area D1 has changed in orientation, the detection direction C1 has also changed. The detection direction C1 is defined as the midpoint between the edges of the detection area D1. Thus, the detection direction C1 has changed by an angle of E/2 (in the direction of the rotation of the first cover 106), as illustrated in Figure 7, relative to the detection direction C of Figure 6.

In Figure 7, the first cover 106 is in a partially closed position. As the aperture 110 is a fixed width, the effective detection area D1 can be reduced at one edge by rotating the first cover 106 to overlap the side wall 108 with part of the previous detection area D (corresponding to the field of view of the sensor 104) at one edge. In Figure 7, the first cover 106 is arranged such that the aperture 110 partially overlaps with the detection area D1.

The first cover 106 may be further rotated in the same direction to further move the aperture 110 and cause the side wall 108 to cover more of the field of view of the sensor 104. This would further reduce the size of the detection area D1. The first cover 106 may be further rotated to a closed position. In the closed position, the first cover 106 is arranged such that the sensor 104 is completely covered by the side wall 108. Thus, the sensor 104 is hidden in the closed position.

Referring to Figures 8 to 10, the operation with respect to the first cover 106 and the second cover 112 will now be described. Turning to Figure 8, the detector 100 has been simplified to show the sensor 104, the first cover 106, and the second cover 112. The detector 100 of Figure 8 is identical to the detector 100 of Figure 6, except that the detector 100 also comprises a second cover 112.

In Figure 8, the second cover 112 has a side wall 114. In this embodiment, the side wall 114 has an aperture 116 extending half way around the side wall 114, in the same way as the first cover 106 as described above with reference to Figure 6. In Figure 8, the aperture 116 of the second cover 112 is aligned with the aperture 110 of the first cover 106, such that the sensor 104 is exposed. The detection area D is defined by an overlap of the field of view of the sensor 104 with the aperture 110 of the first cover 106 and the aperture 116 of the second cover 112. In Figure 8, the detection area D is equal to the field of view of the sensor and corresponds to the maximum field of view (i.e. when the first cover 106 and the second cover 112 do not interfere with the field of view).

Turning to Figure 9, as described above the first cover 106 can be rotated by an angle E. In Figure 9, the second cover 112 is also rotated in the opposite direction by a second cover adjustment angle F. In particular, the first cover 106 has been rotated in a clockwise direction, while the second cover 112 has been rotated in an anticlockwise direction. In Figure 9, the angle F is the same magnitude as the angle E, which is 20°.

Figure 9 shows a detection area D2 and a detection direction C2. As described above, rotating the first cover 106 by an angle E reduces the detection area D2 by an angle E on one edge relative to the detection area D, and shifts the detection direction C2 by an amount E/2. To compensate for the change in detection direction C2, the second cover 112 can be used to reduce the detection area D2 at the opposing edge. By rotating the second cover 112 by an amount F, such that the side wall 114 of the second cover 112 blocks the detection area D2 by an amount F (equal to E), then the effective detection area D2 is reduced by an amount E on each edge. Thus the total detection area D2 is reduced by E+F, which in this case is 2E, relative to the detection area D.

The detection direction C2 is defined as the mid-way between the two edges of the detection area D2, and thus as the detection area D2 has been reduced by equal amounts at the edges, the detection direction C2 is the same as the detection direction C. In other words, after the rotation of the first cover 106 and the second cover 112 in opposing directions by the same amount, the detection direction C2 is unchanged.

The first cover 106 and the second cover 112 can therefore be used in combination to adjust the detection area D2. In particular, this also allows the detection direction C2 to be set. As shown in Figure 9, the detection direction C2 is perpendicular to the plane of the sensor 104, in the same direction as in Figure 8, but the detection area D2 has been changed relative to the detection area D. This allows the detection area D2 to be changed without changing the detection direction C2.

Therefore, by rotating the first cover 106 and the second cover 112 in opposite directions, the detection area D2 can be changed, without changing the detection direction C2. Altering the detection area D2 without altering the detection direction C2 can be useful for calibration where multiple sensors 104 are used.

Turning to Figure 10, the first cover 106 and the second cover 112 can be further rotated to adjust the detection direction C3 without changing the detection area D3. In Figure 10, the first cover 106 is rotated by an angle E1, in an anticlockwise direction. The second cover 112 is rotated in the same direction by an angle F1, in the anticlockwise direction. In Figure 10, the angle F1 is the same as the angle E1, which is 10°. Thus, relative to Figure 8, the first cover 106 has been rotated clockwise 20° and anticlockwise 10°, providing a net rotation of 10° clockwise, while the second cover 112 has been rotated anticlockwise 20° and anticlockwise 10°, providing a net rotation of 30° anticlockwise.

Figure 10 shows a detection area D3 that is different to the detection area D of Figure 8, and a detection direction C3 that is different to the detection direction C of Figure 8. As the first cover 106 and the second cover 112 are rotated in the same direction by the same amount, the detection area D3 is unchanged in magnitude relative to the detection area D2 of Figure 9. This assumes that the rotation is not sufficient to move the detection area D3 beyond the field of view of the sensor 104 such that this becomes a limiting factor. As a result of this, the rotation shifts the orientation of the detection area D3. In other words, this changes the detection direction C3 by an amount E1=F1 relative to the detection direction C2 of Figure 9, which was identical to the detection direction C of Figure 8.

Overall, the first cover 106 and the second cover 112 can be rotated in opposite directions to change the detection area D3, while they can be rotated in the same direction to change the detection direction C3. If the first cover 106 and the second cover 112 are rotated by the same amount in the same direction, the detection area D3 will be unchanged.

Embodiments are further exemplified in the following numbered non-limiting clauses:
1. A detector comprising:
   a first cover having a cylindrical wall comprising a first aperture, and defining an interior space;
   a second cover having a cylindrical wall comprising a second aperture, wherein the second cover is arranged concentrically around the first cover; and
   a sensor mounted within the interior space, wherein the sensor has a field of view and is configured to detect infrared radiation;
   wherein an overlap of the first aperture and the second aperture with the field of view of the sensor defines a detection area of the detector;
   and wherein the first cover and the second cover are each rotatable around the sensor to adjust the detection area.
2. The detector according to clause 1, wherein the first cover and the second cover are rotatable in the opposite directions to adjust the size of the detection area.
3. The detector according to clause 1 or 2, wherein the first cover and the second cover are rotatable in the same direction to adjust the orientation of the detection area.
4. The detector according to any one of the preceding clauses, wherein the first cover and the second cover are each rotatable around a central axis A.
5. The detector according to any one of the preceding clauses, further comprising an upper mount, wherein the first cover and/or the second cover is rotatably attached to the upper mount.
6. The detector according to any one of the preceding clauses, wherein the first cover is rotatably attached to the second cover at an end of the first cover.
7. The detector according to any one of the preceding clauses, wherein the first cover comprises an end surface having a first hole and the second cover comprises an end surface having a second hole aligned with the first hole, and wherein the detector comprises a rod configured to be inserted into the first hole and the second hole for securing the first cover and the second cover, while enabling rotation of the first cover and the second cover about the rod.
8. The detector according to clause 7, wherein the rod is threaded and the first hole and the second hole have a complementary thread to receive the threaded rod.
9. The detector according to any one of the preceding clauses, wherein the detector has a plurality of sensors, optionally wherein the combined field of view of the plurality of sensors is 180°.
10. The detector according to any one of the preceding clauses, wherein the detection area is adjustable between 0° and 180°, optionally wherein the detection area is continuously adjustable to a precision of at least 10°, 5°, 2°, or 1°.
11. The detector according to any one of the preceding clauses, wherein the first aperture extends at least 180° around the cylindrical wall of the first cover, and/or the second aperture extends at least 180° around the cylindrical wall of the second cover.
12. The detector according to any one of the preceding clauses, further comprising a support guide for receiving an end of the first cover and/or the second cover.
13. The detector according to any one of the preceding clauses, wherein the detector comprises a Fresnel lens for focussing infrared radiation to the sensor.
14. The detector according to any one of the preceding clauses, wherein the sensor is a passive infrared sensor, preferably a pyroelectric sensor.
15. The detector according to any one of the preceding clauses, wherein the first cover is arranged in contact with the second cover, such that the first cover is rotatable with the second cover.
16. The detector according to clause 15, wherein the first cover being rotatable with the second cover is provided by friction between the first cover and the second cover.
17. The detector according to clause 16, wherein the friction can be overcome by retaining the first cover in place while the second cover is rotated or retaining the second cover in place while the first cover is rotated.
18. The detector according to any one of the preceding clauses, further comprising a retaining element for retaining the first cover in place while the second cover is rotated or for retaining the second cover in place while the first cover is rotated.
19. The detector according to any one of the preceding clauses, further comprising a locking element for attaching the first cover to the second cover such that as the second cover is rotated, the first cover is also rotated in the same direction, and such that as the first cover is rotated, the second cover is also rotated in the same direction.
20. The detector according to any one of the preceding clauses, further comprising a motor configured to rotate the first cover and/or the second cover.
21. A method of adjusting the detector according to any preceding clause, comprising:
   rotating the first cover and the second cover around the sensor to adjust the detection area.
22. The method according to clause 21, further comprising:
   rotating the first cover and the second cover in the opposition directions to adjust the size of the detection area.
23. The method according to clause 21, further comprising:
   rotating the first cover and the second cover in the same direction to adjust the orientation of the detection area.
24. A method of manufacturing a detector, comprising:
   providing a first cover having a cylindrical wall comprising a first aperture, and defining an interior space;
   providing a second cover having a cylindrical wall comprising a second aperture;
   arranging the second cover concentrically around the first cover; and
   mounting a sensor within the interior space, wherein the sensor has a field of view and is configured to detect infrared radiation;
   wherein an overlap of the first aperture and the second aperture with the field of view of the sensor defines a detection area of the detector;
   and wherein the first cover and the second cover are each rotatable around the sensor to adjust the detection area.
25. A method according to clause 24 further comprising rotating the first cover and the second cover around the sensor to adjust the detection area, optionally wherein the first and second covers are rotated in the same or in opposite directions.

## Claims

1. A detector comprising:
a first cover having a cylindrical wall comprising a first aperture, and defining an interior space;
a second cover having a cylindrical wall comprising a second aperture, wherein the second cover is arranged concentrically around the first cover; and
a sensor mounted within the interior space, wherein the sensor has a field of view and is configured to detect infrared radiation;
wherein an overlap of the first aperture and the second aperture with the field of view of the sensor defines a detection area of the detector;
and wherein the first cover and the second cover are each rotatable around the sensor to adjust the detection area.

2. A detector according to claim 1 wherein the detection area is adjustable to an angle between 10° and 180°, optionally wherein the detection area is continuously adjustable to a precision of at least 10°, 5°, 2°, or 1°.

3. The detector according to claim 1 or 2, wherein the first cover and the second cover are rotatable in the opposite directions to adjust the size of the detection area and wherein the first cover and the second cover are rotatable in the same direction to adjust the orientation of the detection area.

4. The detector according to any one of the preceding claims, further comprising an upper mount, wherein the first cover and/or the second cover is rotatably attached to the upper mount.

5. The detector according to any one of the preceding claims, wherein the first cover is rotatably attached to the second cover at an end of the first cover.

6. The detector according to any one of the preceding claims, wherein the first cover comprises an end surface having a first hole and the second cover comprises an end surface having a second hole aligned with the first hole, and wherein the detector comprises a rod configured to be inserted into the first hole and the second hole for securing the first cover and the second cover, while enabling rotation of the first cover and the second cover about the rod, optionally, wherein the rod is threaded and the first hole and the second hole have a complementary thread to receive the threaded rod.

7. The detector according to any one of the preceding claims, wherein the detector has a plurality of sensors, optionally wherein the combined field of view of the plurality of sensors is 180°.

8. The detector according to any one of the preceding claims, wherein the first aperture extends at least 180° around the cylindrical wall of the first cover, and/or the second aperture extends at least 180° around the cylindrical wall of the second cover.

9. The detector according to any one of the preceding claims, further comprising a support guide for receiving an end of the first cover and/or the second cover.

10. The detector according to any one of the preceding claims, wherein the detector comprises a Fresnel lens for focussing infrared radiation to the sensor.

11. The detector according to any one of the preceding claims, wherein the sensor is a passive infrared sensor, preferably a pyroelectric sensor.

12. The detector according to any one of the preceding claims, wherein the first cover is arranged in contact with the second cover, such that the first cover is rotatable with the second cover, optionally wherein the detector further comprises a locking element for attaching the first cover to the second cover such that as the second cover is rotated, the first cover is also rotated in the same direction, and such that as the first cover is rotated, the second cover is also rotated in the same direction.

13. The detector according to any one of the preceding claims, further comprising a retaining element for retaining the first cover in place while the second cover is rotated or for retaining the second cover in place while the first cover is rotated.

14. A method of adjusting the detector according to any preceding claim, comprising:
rotating the first cover and the second cover around the sensor to adjust the detection area.,
optionally comprising rotating the first cover and the second cover in the opposition directions to adjust the size of the detection area and/or
rotating the first cover and the second cover in the same direction to adjust the orientation of the detection area.

15. A method of manufacturing a detector, comprising:
providing a first cover having a cylindrical wall comprising a first aperture, and defining an interior space;
providing a second cover having a cylindrical wall comprising a second aperture;
arranging the second cover concentrically around the first cover; and
mounting a sensor within the interior space, wherein the sensor has a field of view and is configured to detect infrared radiation;
wherein an overlap of the first aperture and the second aperture with the field of view of the sensor defines a detection area of the detector;
and wherein the first cover and the second cover are each rotatable around the sensor to adjust the detection area.
